# EUROPÄISCHE PATENTSCHRIFT

(11) **EP 2 145 662 B1**
(45) Veröffentlichungstag und Bekanntmachung des Hinweises auf die Patenterteilung: **12.12.2012**
(21) Anmeldenummer: 09008242.1
(22) Anmeldetag: 24.06.2009
(51) Int. Cl.: B01D 46/48, F23J 15/02, B65G 53/36, B01D 45/18, B03C 3/88, F23J 3/00, B65G 53/16

(54) **Entaschungsanlage für Flugasche und Verfahren zum Betrieb der Anlage**
Ash removal system for fly ash and method for operating the system
Installation de décendrage pour cendres volantes et procédé de fonctionnement de l'installation

(30) Priorität: 15.07.2008 DE 102008033266
(43) Veröffentlichungstag der Anmeldung: 20.01.2010
(60) Teilanmeldung: 12002890.7
(73) Patentinhaber: FLSmidth A/S, 2500 Valby (DK)
(72) Erfinder: Duwe, Carsten, 22529 Hamburg (DE); Brocks, Michael, 25371 Seestermühe (DE)
(74) Vertreter: Mönkemeyer, Philipp

(56) Entgegenhaltungen:
- EP-A- 1 295 822
- DE-B- 1 123 789
- DE-U1- 9 404 902
- FR-A- 1 327 967
- GB-A- 383 683
- GB-A- 191 404 454
- US-A- 4 205 931

## Beschreibung

Die Erfindung bezieht sich auf eine Entaschungsanlage für Flugasche nach dem Anspruch 1 und auf ein Verfahren der Anlage nach dem Anspruch 10.

Die Entstaubung von Rauchgasen bzw. Entaschung für Flugasche, etwa in einem Kohlekraftwerk, weist eine Anordnung von Filtereinheiten auf, die vom Rauchgas durchströmt werden. Ein Beispiel für eine Anordnung von Filtereinheiten zeigt die US 4,205,931. Mit Hilfe von Vorrichtungen wird der gesammelte Staub in trichterförmige Behälter ausgetragen. Von dort wird der Staub mit Hilfe von Förderanlagen in Druckgefäße transportiert. In den Druckgefäßen angesammelter Staub wird mit Hilfe von Förderluft zu einem geeigneten Silo ausgetragen. Während dieses Austragsvorgangs ist eine Ventilanordnung zwischen Trichter und Druckgefäß geschlossen. Es versteht sich, dass während des Entleerens des Druckgefäßes (Förderzyklus) kein Staub in das Druckgefäß eingetragen werden kann. Daher muss während des Entleerungsvorgangs der Zugang zum Druckgefäß gesperrt werden.

Es ist auch bekannt, die einzelnen trichterförmigen Gefäße zum Auffangen des Staubs einer Gruppe von Druckgefäßen zuzuordnen, beispielsweise in Feldern quer zur Gasströmungsrichtung und parallelen Reihen in Gasströmungsrichtung, wobei die Trichter relativ eng zusammen liegen. Die Druckgefäße sind mit Entlüftungsleitungen ausgerüstet, weil die Luft beim Befüllen der Druckgefäße naturgemäß entweichen muss. Es versteht sich außerdem, dass diese Luft nicht in die Atmosphäre entweichen darf.

Eine derartige Entstaubungs- bzw. Entaschungsanlage nimmt ein erhebliches Bauvolumen ein, und der apparative Aufwand ist beträchtlich. Insbesondere liegt bei bekannten Entstaubungsanlagen die Bauhöhe der Trichter weit oberhalb der Druckgefäße, weil noch ein Puffergefäß zwischengeordnet ist, in dem der Staub gestapelt wird, bevor er in das Druckgefäß eingetragen wird. Je höher eine derartige Entstaubungsanlage gebaut werden muss, umso größer ist der bauliche Aufwand.

Es ist alternativ auch denkbar bzw. bekannt, unter jedem Filtertrichter ein Druckgefäß anzuordnen. Dies erhöht jedoch den apparativen Aufwand beträchtlich. Ein längeres Lagern großer Mengen von Staub im Trichter selbst ist hingegen unerwünscht.

Der Erfindung liegt die Aufgabe zugrunde, eine Entstaubungs- bzw. Entaschungsanlage für Flugasche zu schaffen, die einen geringen apparativen Aufwand aufweist sowie eine geringe Bauhöhe.

Diese Aufgabe wird durch die Merkmale des Anspruchs 1 gelöst.

Bei der erfindungsgemäßen Anlage sind Druckgefäße nur unter dem in Strömungsrichtung des Rauchgases gesehen, hinteren Feld angeordnet, und diese Trichter sind ohne Pufferbehälter nahezu unmittelbar über Ventile mit einem Druckgefäß verbunden. Die Trichter der anderen Felder sind unmittelbar über Ventile mit einer pneumatischen Förderrinne verbunden, deren Querschnitt in Strömungsrichtung des Rauchgases zunehmen kann und die zum Druckgefäß hin ein geringes Gefälle aufweist. Nach einer Ausgestaltung der Erfindung beträgt das Gefälle der pneumatischen Förderrinne etwa zwischen 1 und 6 Grad.

Dadurch, dass das hinterste Trichterfeld ohne Pufferbehälter nahezu unmittelbar mit den Druckgefäßen verbunden ist, ergibt sich eine geringe Bauhöhe für die gesamte Entstaubungsanlage. Auch der apparative Aufwand ist gering, da jeweils nur ein Druckgefäß für eine Reihe von Trichtern eingesetzt wird. Das Stapeln des Staubs findet in der pneumatischen Förderrinne statt, die im Querschnitt zum Druckgefäß z.B. schrittweise zunimmt. Das Schüttgut in der Förderrinne wird durch Druckluft fluidisiert, wobei in räumlichen Abständen die Druckluft geregelt zugeführt wird, um eine gleichmäßige Verteilung der Druckluft in an sich bekannten pneumatischen Förderrinnen zu erzielen.

Falls nicht das hinterste Feld zur Anordnung der Druckgefäße gewählt wird, muss jeweils eine Förderrinne von den aufströmseitigen Trichtern und eine von den abströmseitigen Trichtern zu dem jeweiligen Druckgefäß geführt werden, wobei das Gefälle in den Rinnen naturgemäß entgegengesetzt gerichtet ist.

Nach einer weiteren Ausgestaltung der Erfindung ist die Fluidisierluft für die pneumatische Förderrinne beheizt.

Nach einer anderen Ausgestaltung der Erfindung ist das Druckgefäß jeder Trichterreihe über eine Entlüftungsleitung mit dem Trichter verbunden, der in Strömungsrichtung gesehen der erste ist. Bei einer weiteren Ausgestaltung der Erfindung ist die Förderrinne zwischen den Druckgefäßen bzw. den Trichtern ebenfalls mit der Entlüftungsleitung verbunden. Auf diese Weise wird eine einwandfreie Entlüftung enthalten, ohne dass Gefahr besteht, dass Staub in die Umgebung eingetragen wird.

Nach einer weiteren Ausgestaltung der Erfindung ist die Entlüftungsleitung beheizt und/oder thermisch isoliert.

Die erfindungsgemäße Lösung nach Anspruch 10 sieht ein Verfahren zum Betrieb einer Entaschungsanlage der eingangs genannten Art vor. Erfmdungsgemäß wird der Staub während der Druckgefäß-Förderzyklen in den Förderrinnen gestapelt, die unterhalb der Trichter der Trichterreihen mit den Trichtern über Ventile verbunden werden, wobei der Staub in der mit Gefälle versehenen Förderrinne fluidisiert wird, damit er ohne weiteres in die Druckgefäße gefördert werden kann. Aus den Trichtern unmittelbar oberhalb der Druckgefäße wird der Staub ohne Zwischenschaltung von Pufferbehältern oder dergleichen im Wesentlichen unmittelbar in die Druckgefäße eingetragen.

Aus den Druckgefäßen wird der Staub nach einer weiteren Ausgestaltung der Erfindung vorzugsweise gruppenweise ausgetragen. Während dieses Austragens kann der Staub nur in die Druckgefäße einer anderen Gruppe eingetragen werden. Somit können das Eintragen von Staub in Druckgefäße und das Austragen von Staub aus den Druckgefäßen im Wesentlichen intermittierend erfolgen, wobei lediglich eine kurze Unterbrechung bei der Umschaltung vom Eintrag- in den Austragbetrieb stattfindet.

Ein Ausführungsbeispiel der Erfindung wird nachfolgend anhand von Zeichnungen näher erläutert.
- Fig. 1: zeigt perspektivisch eine Entaschungsanlage nach der Erfindung.
- Fig. 2: zeigt eine Draufsicht der Entaschungsanlage nach Fig. 1.
- Fig. 3: zeigt eine Seitenansicht der Entaschungsanlage nach Fig. 2.
- Fig. 4: zeigt eine Seitenansicht der Entaschungsanlage nach Fig. 2.
- Fig. 5: zeigt eine Einzelheit 5 nach Fig. 4.
- Fig. 6: zeigt eine Einzelheit 6 nach Fig. 4.
- Fig. 7: zeigt eine Einzelheit 7 nach Fig. 4.

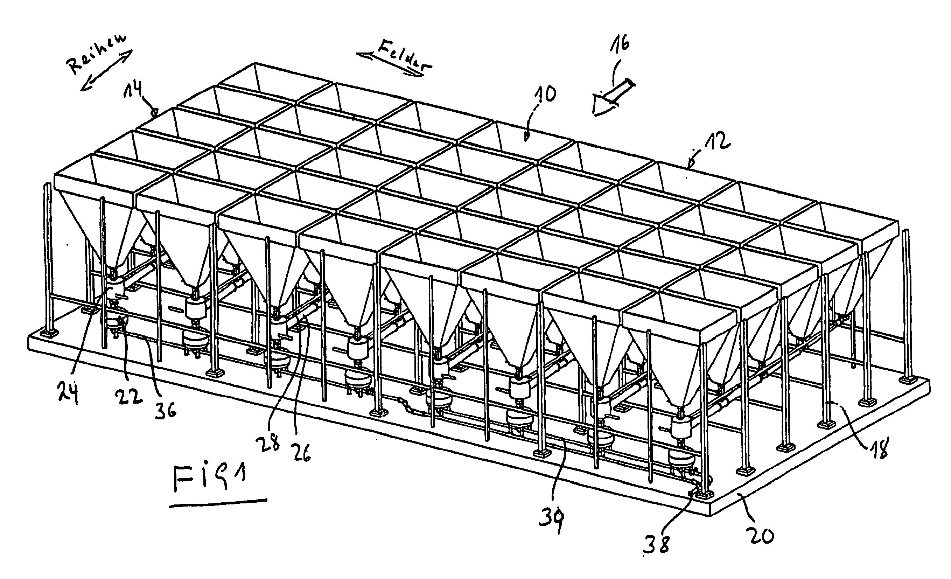

In Fig. 1 ist ein Feld von im Querschnitt rechteckigen Trichtern 10 zu erkennen, welche in Feldern 12 und Reihen 14 angeordnet sind. Acht Trichter 10 bilden jeweils ein elektrisches Feld und fünf Trichter eine Reihe. Die oberen Enden der Trichter 10 liegen in gleicher Höhe und eng aneinander. Das Feld der Trichter 10 befindet sich unterhalb einer nicht gezeigten Filteranordnung, die beispielsweise aus elektrostatischen Filtern besteht, durch welche Rauchgas strömt. Die Strömungsrichtung des Rauchgases ist durch Pfeil 16 angedeutet. Der in der Filteranordnung abgeschiedene Staub wird in die einzelnen Trichter 10 geleitet. Eine solche Anlage ist im Prinzip bekannt und soll nicht weiter erörtert werden.

Die Trichter 10 sind mittels einzelner Ständer bzw. Stützen 18 auf einer Fundamentplatte 20 angeordnet.

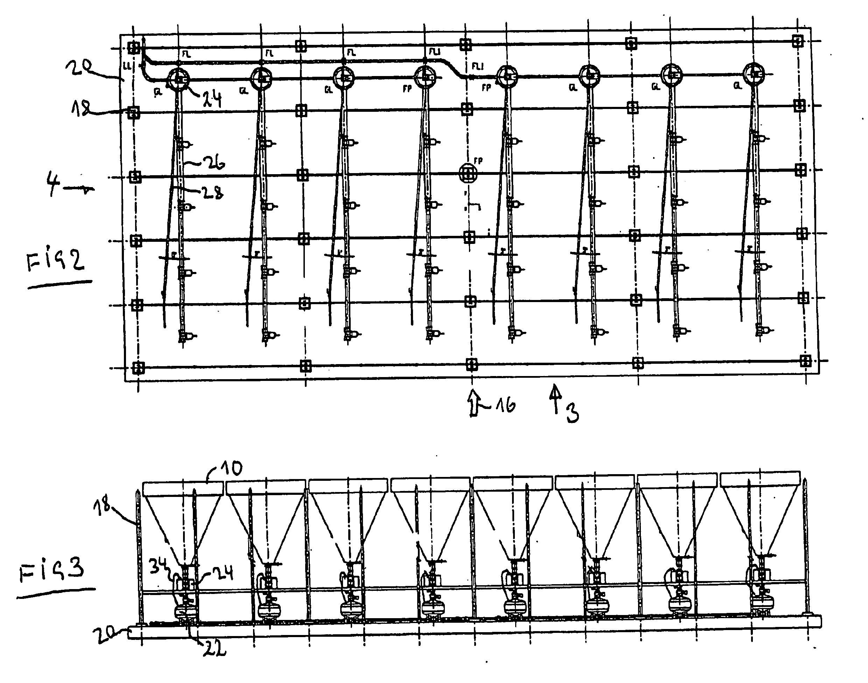

Der in Strömungsrichtung des Gases hinteren Felder der Trichter 10 sind Druckgefäße 22 zugeordnet. Sie befinden sich jeweils unterhalb eines Trichters 10 dieses Feldes unter Zwischenschaltung eines Entlüftungsbehälters 24. Unterhalb jeder Reihe 14 der Trichter 10 ist ferner eine pneumatische Förderrinne 26 angeordnet, die über den Entlüftungsbehälter 24 mit dem Druckgefäß 22 verbunden ist. Dies lässt sich auch aus Fig. 2 entnehmen. Neben bzw. oberhalb der Förderrinne 26 ist eine Entlüftungsrinne 28 angeordnet, die ebenfalls mit dem Entlüftungsbehälter 24 verbunden ist und mit den Trichtern 10 des ersten Feldes in dem oberen Bereich in Verbindung steht. Die Förderrinne 26 ist zwischen den Trichtern 10 über ein Verbindungsleitungsstück 30 ebenfalls mit der Entlüftungsrinne 28 verbunden.

Die Druckgefäße 22 sind über eine Entlüftungsleitung 34 mit dem Entlüftungsbehälter 24 verbunden.

Wie insbesondere aus den Fign. 1 und 2 hervorgeht, bilden vier Druckgefäße des letzten Feldes jeweils eine Druckgefäßgruppe. Die in Fig. 1 linke Gruppe ist mit einer gemeinsamen Förderleitung 36 verbunden und die in Fig. 1 rechte Gruppe von den vier Druckgefäßen ist mit einer Förderleitung 39 verbunden. Beide Förderleitungen 36, 39 sind mit einer gemeinsamen Förderleitung 38 verbunden.

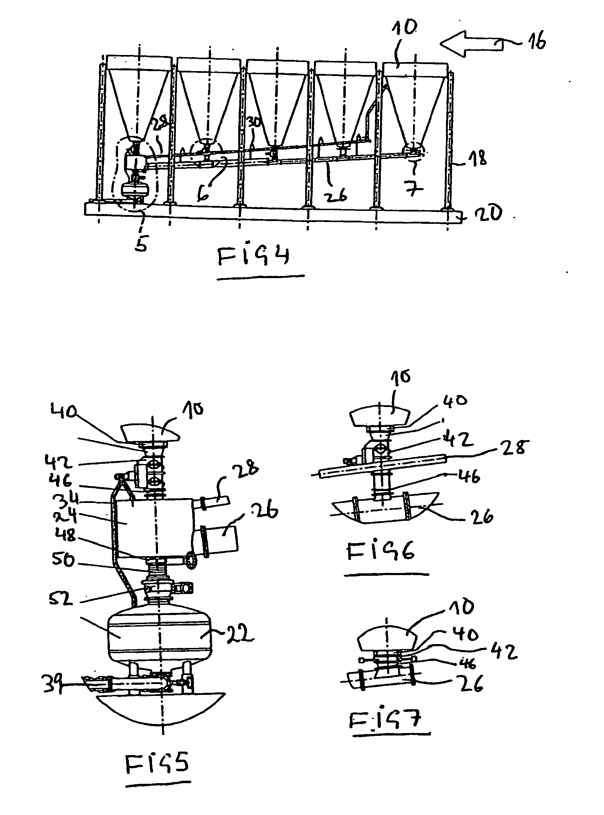

In den Fign. 5 bis 7 ist zu erkennen, dass unterhalb der Trichter 10 Absperrschieber 40 angeordnet sind, denen bei der Anordnung nach den Fign. 5 und 6 eine Doppelschleuse 42 folgt, die gemäß Fig. 5 über einen Kompensator 46 mit dem Entlüftungsbehälter 24 verbunden ist. Zwischen dem Entlüftungsbehälter 24 und dem Druckgefäß sind ein weiterer Absperrschieber 48, ein Kompensator 50 und ein weiteres Ventil 52 angeordnet.

Die beschriebene Anlage arbeitet wie folgt.

Von der nicht gezeigten Filtervorrichtung gelangt Staub in Strömungsrichtung des Rauchgases 16 in die einzelnen Trichter 10, wobei die größere Fracht bereits zu Beginn im ersten Feld abgeschieden wird und in Strömungsrichtung des Gases abnimmt, ebenso die Größe der Staubteilchen. Aus den Trichtern 10 gelangt das Material über den Schieber 40 und die Einfach- (Felder 1, 2) bzw. Doppelschleuse 42 (Feld 3, 4, 5) entweder unmittelbar in die Förderrinne 26 oder in der letzten Trichterreihe über den Entlüftungsbehälter 24 in das Druckgefäß 22, wobei hier das Ventil 52 ebenfalls geöffnet sein muss. Die Förderrinne 26 weist einen von den ersten zum letzten Feld der Trichter zunehmenden Querschnitt auf. Das Material wird mit Hilfe von Druckluft, welche geregelt in Abständen der Förderrinne 26 zugeführt wird, fluidisiert. Die Ausbildung derartiger Förderrinnen ist an sich bekannt.

Während der Entleerung der Druckgefäße ist die Zuführung zu den Druckgefäßen 22 unterbrochen. Das Ventil 52 ist hierbei geschlossen. Das Material sammelt sich daher in der Förderrinne 26. Beim Entleeren der Druckgefäße wird so vorgegangen, dass eine erste Gruppe von Druckgefäßen 22 mit Druckluft gespeist wird, was hier nicht dargestellt ist. Dadurch wird das Material aus den Druckgefäßen 22 je nach Ansteuerung entweder über die Förderleitung 36 oder die Förderleitung 39 ausgetragen. Somit ist während des Austragvorgangs aus den betreffenden Druckgefäßen die Zufuhr von Material blockiert. Bezüglich der anderen Druckgefäße kann jedoch nach wie vor eine Materialzufuhr erfolgen, so dass nahezu kontinuierlich eine Zufuhr und Abfuhr von Staub gewährleistet ist.

Während des Befüllungsvorgangs sorgt die beschriebene Entlüftung dafür, dass Luft aus den Druckgefäßen 22 und den Förderrinnen 26 entweichen kann.

## Patentansprüche

1. Entaschungsanlage für Flugasche, mit einer Feldvielzahl von Trichtern unterhalb einer Filteranordnung, die parallel zur Strömungsrichtung des Rauchgases in einzelne Reihen und in Querrichtung in Felder eingeteilt sind, wobei den Trichtern Druckgefäße unterhalb der Trichter zugeordnet sind, denen über Ventile Staub aus den Trichtern zugeführt wird, wobei zur Entleerung der Druckgefäße diese mit Druckluftleitungen verbunden sind und der Staub aus den Druckgefäße über eine Abförderleitung in ein Silo oder dergleichen abgefördert werden kann und mit den Druckgefäßen eine Entlüftungsleitung verbunden ist, **dadurch gekennzeichnet, dass** in Strömungsrichtung des Rauchgases gesehen Druckgefäße (22) nur unter den Trichtern des letzten Feldes (12) angeordnet sind, wobei diese Trichter (10) ohne Sammelbehälter unmittelbar über Ventile (52) jeweils mit einem Druckgefäß (22) verbunden sind, und wobei die Trichter (10) der anderen Felder (12) in jeder Reihe (14) unmittelbar über Ventile mit einer pneumatischen Förderrinne (26) verbunden sind, deren Querschnitt in Strömungsrichtung (16) des Rauchgases zunimmt und die zum jeweiligen Druckgefäß (22) ein geringes Gefälle aufweist.

2. Entaschungsanlage nach Anspruch 1, **dadurch gekennzeichnet, dass** die pneumatische Förderrinnen (26) ein Gefälle von 1 - 6 Grad, vorzugsweise 3 - 5 Grad aufweisen.

3. Entaschungsanlage nach Anspruch 1 oder 2, **dadurch gekennzeichnet, dass** das Druckgefäß (22) jeder Trichterreihe (14) über eine Entlüftungsleitung (28) mit einem Trichter des ersten oder zweiten Feldes (12), in Strömungsrichtung gesehen, verbunden ist.

4. Entaschungsanlage nach Anspruch 3, **dadurch gekennzeichnet, dass** die Förderrinnen (26) zwischen den Trichtern (10) mit der Entlüftungsrinne (28) verbunden sind.

5. Entaschungsanlage nach Anspruch 3 oder 4, **dadurch gekennzeichnet, dass** die Druckgefäße (22) über einen Entlüftungsbehälter (24) mit der Entlüftungsrinne (28) verbunden sind.

6. Entaschungsanlage nach einem der Ansprüche 1 - 5, **dadurch gekennzeichnet, dass** die Druckgefäße (22) zu Gruppen zusammengefasst sind und jeder Gruppe eine gemeinsame Förderleitung (38) zugeordnet ist.

7. Entaschungsanlage nach einem der Ansprüche 1 - 6, **dadurch gekennzeichnet, dass** Fluidisierungsluft in Abständen in die pneumatische Förderrinne (26) eingetragen wird.

8. Entaschungsanlage nach einem der Ansprüche 1 - 7, **dadurch gekennzeichnet, dass** die Fluidisierungsluft für die pneumatische Förderrinne (26) beheizt ist.

9. Entaschungsanlage nach einem der Ansprüche 1 - 8, **dadurch gekennzeichnet, dass** die Entlüftungsleitung (28) beheizt und/oder thermisch isoliert ist.

10. Verfahren zum Betrieb einer Entaschungsanlage mit einer Anzahl von Trichtern unterhalb einer Filteranordnung, die parallel in Strömungsrichtung des Rauchgases in einzelnen Reihen und in Querrichtung dazu in Feldern angeordnet sind, wobei den Trichtern der letzfen Feldes Druckgefäße unterhalb der Trichter zugeordnet sind, denen ohne sammenelbehäßen mittelbar über Ventile Staub aus den Trichtern zugeführt wird, wobei zur Entleerung die Druckgefäße mit Druckluftleitungen verbunden sind und der Staub aus den Druckgefäßen über eine Förderleitung zu einem Silo oder dergleichen abgeführt wird und mit den Druckgefäßen Entlüftungsleitungen verbunden sind, **dadurch gekennzeichnet, dass** der Staub in den Förderrinnen (26) gestapelt wird, die unterhalb der Trichter der anderen Felder mit den Trichtern der anderen Felder über Ventile verbunden werden, der Staub in den in Strömungsrichtung des Rauchgases einen zunehmenden Querschnitt aufweisenden Förderrinnen mit Gefälle fluidisiert wird und der Staub am Ende der Förderrinnen (26) jeweils unmittelbar in das Druckgefäß (22) eingetragen wird.

11. Verfahren nach Anspruch 10, **dadurch gekennzeichnet, dass** der Staub aus den Druckgefäßen (22) gruppenweise ausgetragen wird, während in die jeweils andere(n) Gruppe(n) Staub eingetragen wird.

## Claims

1. An ash removal installation, for fly ash in particular, with an arrayed plurality of funnels below a filter arrangement, which are subdivided into individual rows parallel to the flow direction of the waste gas, and into arrays in the transverse direction, wherein pressure tanks below the funnels are associated to the funnels, to which dust from the funnels is supplied via valves, wherein said pressure tanks are connected to pressurised air lines for dumping the same, and the dust from the pressure tanks can be conveyed down into a silo or the like via a discharge line, and a vent line is connected with the pressure tanks, **characterised in that** seen in the flow direction of the waste gas, pressure tanks (22) are arranged only below the funnels of the last array (12), wherein these funnels (10) are connected to a pressure tank (22) each almost directly via valves (52) without collecting tanks, and wherein the funnels (10) of the other arrays (12) in each row are connected to a pneumatic conveyor channel (26) almost directly via valves wherein the cross section of said pneumatic conveyor channel increases in the flow direction (16) of the waste gas and it has a small downgrade towards the pressure tank (22).

2. An ash removal installation according to claim 1, **characterised in that** the pneumatic conveyor channels (26) have a downgrade of 1 - 6 degrees, preferably 3 - 5 degrees.

3. An ash removal installation according to claim 1 or 2, **characterised in that** the pressure tank (22) of each row (14) of funnels is connected to a funnel of the first or second array (12), seen in the flow direction, via a vent line (28).

4. An ash removal installation according to claim 3, **characterised in that** the conveyor channels (26) between the funnels (10) are connected to the vent channel (28).

5. An ash removal installation according to claim 3 or 4, **characterised in that** the pressure tanks (22) are connected to the vent channel (28) via a venting tank (24).

6. An ash removal installation according to any one of claims 1 to 5, **characterised in that** the pressure tanks (22) are combined into groups and a common conveying line (38) is associated to each group.

7. An ash removal installation according to any one of claims 1 to 6, **characterised in that** fluidization air is charged into the pneumatic conveyor channel (26) at distances.

8. An ash removal installation according to any one of claims 1 to 7, **characterised in that** the fluidization air for the pneumatic conveyor channel (26) is heated.

9. An ash removal installation according to any one of claims 1 to 8, **characterised in that** the vent line (28) is heated and/or thermally insulated.

10. A method for the operation of an ash removal installation with a number of funnels below a filter arrangement, which are arranged into individual rows parallel to the flow direction of the waste gas, and into arrays in the transverse direction thereto, pressure tanks below the funnels being associated to the funnels of the last array, to which dust from the funnels is supplied without collecting tanks almost directly via valves, wherein said pressure tanks are connected to pressurised air lines for dumping the same, and the dust from the pressure tanks is conveyed down into a silo or the like via a discharge line, and venting lines are connected to the pressure tanks, **characterised in that** the dust is stacked in the conveyor channels (26), which are connected to the funnels of the other arrays below the funnels of the other arrays via valves, the dust is fluidised in the conveyor channels having an increasing cross section in the flow direction of the waste gas and having a downgrade, and the dust is essentially directly charged into the pressure tank (22) at the end of the conveyor channel (26).

11. A method according to claim 10, **characterised in that** the dust is groupwise discharged from the pressure tanks (22), while dust is charged into the respective other group(s).

## Revendications

1. Installation de décendrage pour cendres volantes, comprenant une pluralité de champs d'entonnoirs en dessous d'un agencement de filtre qui sont divisés en rangées individuelles parallèlement à la direction d'écoulement du gaz de fumée et en champs dans la direction transversale, dans laquelle des récipients sous pression en dessous des entonnoirs, auxquels est amenée de la poussière provenant des entonnoirs par le biais de soupapes, sont associés aux entonnoirs, dans laquelle les récipients sous pression sont reliés à des conduites d'air comprimé en vue de la purge de ceux-ci et la poussière provenant des récipients sous pression peut être évacuée par le biais d'une conduite d'évacuation dans un silo ou similaire, et une conduite de purge est reliée aux récipients sous pression, **caractérisée en ce que** des récipients sous pression (22) sont disposés uniquement en dessous des entonnoirs du dernier champ (12), vu dans la direction d'écoulement du gaz de fumée, dans laquelle ces entonnoirs (10) sans réservoir collecteur sont reliés directement par le biais de soupapes (52) chacun à un récipient sous pression (22), et dans laquelle les entonnoirs (10) des autres champs (12) sont reliés dans chaque rangée (14) directement par le biais de soupapes à une rigole de transport pneumatique (26) dont la section transversale croît dans la direction d'écoulement (16) du gaz de fumée et qui présente une faible pente vers le récipient sous pression respectif (22).

2. Installation de décendrage selon la revendication 1, **caractérisée en ce que** les rigoles de transport pneumatiques (26) présentent une pente de 1 à 6 degrés, de préférence 3 à 5 degrés.

3. Installation de décendrage selon la revendication 1 ou 2, **caractérisée en ce que** le récipient sous pression (22) de chaque rangée d'entonnoirs (14) est relié par le biais d'une conduite de purge (28) à un entonnoir du premier ou deuxième champ (12), vu dans la direction d'écoulement.

4. Installation de décendrage selon la revendication 3, **caractérisée en ce que** les rigoles de transport (26) entre les entonnoirs (10) sont reliées à la rigole de purge (28).

5. Installation de décendrage selon la revendication 3 ou 4, **caractérisée en ce que** les récipients sous pression (22) sont reliés par le biais d'un récipient de purge (24) à la rigole de purge (28).

6. Installation de décendrage selon l'une quelconque des revendications 1 à 5, **caractérisée en ce que** les récipients sous pression (22) sont regroupés en groupes et une conduite de transport commune (38) est associée à chaque groupe.

7. Installation de décendrage selon l'une quelconque des revendications 1 à 6, **caractérisée en ce que** de l'air fluidisé est incorporé par intervalles dans la rigole de transport pneumatique (26).

8. Installation de décendrage selon l'une quelconque des revendications 1 à 7, **caractérisée en ce que** l'air fluidisé pour la rigole de transport pneumatique (26) est chauffé.

9. Installation de décendrage selon l'une quelconque des revendications 1 à 8, **caractérisée en ce que** la conduite de purge (28) est chauffée et/ou isolée thermiquement.

10. Procédé de fonctionnement d'une installation de décendrage avec un certain nombre d'entonnoirs en dessous d'un agencement de filtre qui sont disposés en rangées individuelles parallèlement à la direction d'écoulement du gaz de fumée et en champs dans la direction transversale à celle-ci, dans lequel des récipients sous pression en dessous des entonnoirs, auxquels est amenée de la poussière provenant des entonnoirs sans réservoir collecteur directement par le biais de soupapes, sont associés aux entonnoirs du dernier champ, dans lequel les récipients sous pression sont reliés à des conduites d'air comprimé en vue de la purge et la poussière provenant des récipients sous pression est évacuée par le biais d'une conduite de transport vers un silo ou similaire, et des conduites de purge sont reliées aux récipients sous pression, **caractérisé en ce que** la poussière est empilée dans les rigoles de transport (26) qui sont reliées en dessous des entonnoirs des autres champs aux entonnoirs des autres champs par le biais de soupapes, la poussière est fluidisée dans les rigoles de transport avec pente présentant une section transversale croissante dans la direction d'écoulement du gaz de fumée et la poussière est incorporée à chaque fois directement dans le récipient sous pression (22) à l'extrémité des rigoles de transport (26).

11. Procédé selon la revendication 10, **caractérisé en ce que** la poussière est évacuée par groupe des récipients sous pression (22) tandis que de la poussière est incorporée dans le(s) autre(s) groupe(s) respectif(s).
